# EUROPEAN PATENT SPECIFICATION

(11) **EP 3 977 429 B1**
(45) Date of publication and mention of the grant of the patent: **11.12.2024**
(21) Application number: 20730993.1
(22) Date of filing: 25.05.2020
(51) Int. Cl.: G08B 25/00, G01V 15/00, G01V 3/08, G08B 25/01

(54) **METHOD AND SYSTEM FOR IDENTIFYING A SIGNALLING UNIT USER**
VERFAHREN UND SYSTEM ZUR IDENTIFIZIERUNG EINES BENUTZERS EINER SIGNALISIERUNGSEINHEIT
PROCÉDÉ ET SYSTÈME D'IDENTIFICATION D'UN UTILISATEUR D'UNITÉ DE SIGNALISATION

(30) Priority: 27.05.2019 EP 19176844
(43) Date of publication of application: 06.04.2022
(73) Proprietor: Televic Healthcare NV, 8870 Izegem (BE)
(72) Inventor: CROMBEZ, Pieter, 8820 Torhout (BE); CAPPELLE, Wouter, 8800 Roeselare (BE)
(74) Representative: IPLodge bv
(86) International application number: PCT/EP2020/064473
(87) International publication number: WO 2020/239711

(56) References cited:
- EP-A1- 0 969 431
- EP-B1- 0 969 431
- WO-A1-2015/097314
- US-A1- 2013 278 399
- US-A1- 2019 012 479
- US-B2- 10 216 955

## Description

### Technical field

The present invention relates to methods for identifying a user of a signalling unit and systems for identifiably responding to an alarm call. The methods and systems of the present invention are particularly useful in care institutions, such as hospitals, care homes, retirement village homes, etc.

### Background

In hospitals, patients typically have the possibility to call for assistance from their room, and in particular from the bed, the toilet, a chair, etc. The alarm call leads to a signal for the assisting personnel of the care institution, e.g. a hospital or nursing home. Typically this can be a light signal outside the patient's room, possibly in combination with a signal given in the nursing staff room or control room.

In response to the alarm call signal, an alarm call responder (e.g. a nurse, a doctor or any other member of the caring staff) will go to the patient's room and check up on the alarm call. In many cases, it is then the alarm call responder's responsibility to turn off the alarm call signal or perform any other action for communicating with other members of staff, such as requesting extra or specific assistance. In other cases, an alarm call user could be a patient. In such cases it may be important to identify the patient making the alarm call.

Making such calls as patient or care giver, can typically be done by using a signalling unit. Such signalling units can be placed in patient's rooms, typically at strategic places (near/above the bed, in the toilet or bathroom, near the door, etc.), or any other part of the facility (hallways, elevators, operating rooms, etc.).

In many cases, it is desirable to ensure that it is the alarm call responder who turns off the alarm call or requests assistance, in order to make sure that the patient receives the proper care, but also that the patient does not call for specific assistance (e.g. crash cart or other emergency intervention) if this is not required, i.e. it is desirable that false alarms can be avoided. Such false alarms tend to be time-consuming, and their avoidance increases the available time of care givers considerably. Furthermore, it is also desirable that the hospital or care institution can track who has used a signalling unit and/or who has responded to alarm calls.

International patent publication no. WO 2015/097314 A1 in name of the present applicant, relates to a method for detecting a tag in an area monitored by one or more beacons, the tag comprising a magnetic induction module and a radiofrequent (RF) transceiver the method comprising the following steps at said tag: receiving, by means of said magnetic induction module, a first beacon message as variations in a magnetic field, said first beacon message comprising beacon information; extracting said beacon information from said first beacon message; and conditionally on said beacon information, transmitting a localisation message by means of said transmitter. The localisation message is received by an access point with a beacon, which is in contact with a server. The method and system of this patent application allow detecting the presence of a person carrying an identifiable tag in the surroundings of a set of beacons, and this in particular to avoid patients wandering off. However, the system and method of this prior art document cannot be readily applied to the problem of identifying an alarm call user or alarm call responder and secondly which actions he/she requests, which is the aim of the present invention. The beacons of the prior art do not allow a user requesting an appropriate action. Another relevant prior art is known from US2019/012479. In this document a user can access a medical device by pressing his access card against a power button of the device. This initiates a authorisation process betweeen the device and a RFID card of the user. Both the request and the reply channel of this process use radio signals.

Furthermore, the prior art system and method require a constant monitoring of the identification tag (ID-tag). As a result, a varying magnetic field is almost always being transmitted by the beacons, which could interfere with medical instruments and monitors in a patient's room. Furthermore, the continuous monitoring tends to require much energy. For the identification tag, this means that the battery power is being drained and for the beacons, this means that they require power via cable, i.e. it is impractical to use battery-powered beacons. Even more, the system and method of the prior art document require constant interaction of the beacons with a central operating system for allowing localisation and access. This could lead to problems in the case of interruptions of the system when an alarm call arises: one does not want to be dependent on the availability of the beacon network in the case of alarm calls, which could be time-critical.

For the above reasons, there is a need for a new system and method which allows to identify a user of a signalling unit who requests a signalling unit action to be performed, and in particular to identify an alarm call user and responder. Furthermore, there is a need for a system and method which allows automatic identification of the signalling unit user at the moment the user requests a signalling unit action, such as an alarm action or an alarm response action, and this without the user having to perform any particular identification action, i.e. identification needs to be done automatically.

### Summary of the invention

The present invention concerns a method for identifying a user of a signalling unit, and preferably an alarm call responder, in accordance with claim 1. The present invention also concerns a system for identifying a user of a signalling unit, such as a person responding to an alarm call, in accordance with claim 9.

The method of the present invention concerns a method for identifying a user of a signalling unit when said user performs a physical interaction with a user interface of the signalling unit, thereby requesting a signalling unit action, wherein said user carries an identification tag, the method comprising the steps of:
a. transmitting, by the signalling unit, a signalling unit message as variations in a magnetic field;
b. receiving said signalling unit message by the identification tag, and subsequently radiofrequently transmitting a tag response message by the identification tag, said tag response message comprising identification information of the user carrying said identification tag,
c. receiving, by the signalling unit, said tag response message, thereby identifying the user requesting the signalling unit action
whereby said transmission is initiated upon said physical interaction of the user at the user interface of the signalling unit.

The system of the present invention concerns a system for identifying a user of a signalling unit, comprising the signalling unit and an identification tag,
said signalling unit comprising:
   - a physical user interface,
   - a magnetic induction transmission module for transmitting a signalling unit message as variations in a magnetic field,
   - a radiofrequent transceiving module,
and said identification tag comprising:
   - a magnetic induction receiving module for receiving the signalling unit message;
   - a radiofrequent transceiving module for transmitting a tag response message, whereby said signalling unit is configured, upon a user requesting a signalling unit action at said physical user interface of the signalling unit, to transmit a signalling unit message as variations in a magnetic field, and
whereby said identification tag is configured to receive said signalling unit message, and subsequently to radiofrequently transmit a tag response message comprising identification information of the user carrying said identification tag,
and whereby the radiofrequent receiving module of the signalling unit is configured to receive said tag response message for identifying the user requesting the signalling unit action.

### Summary of the drawings

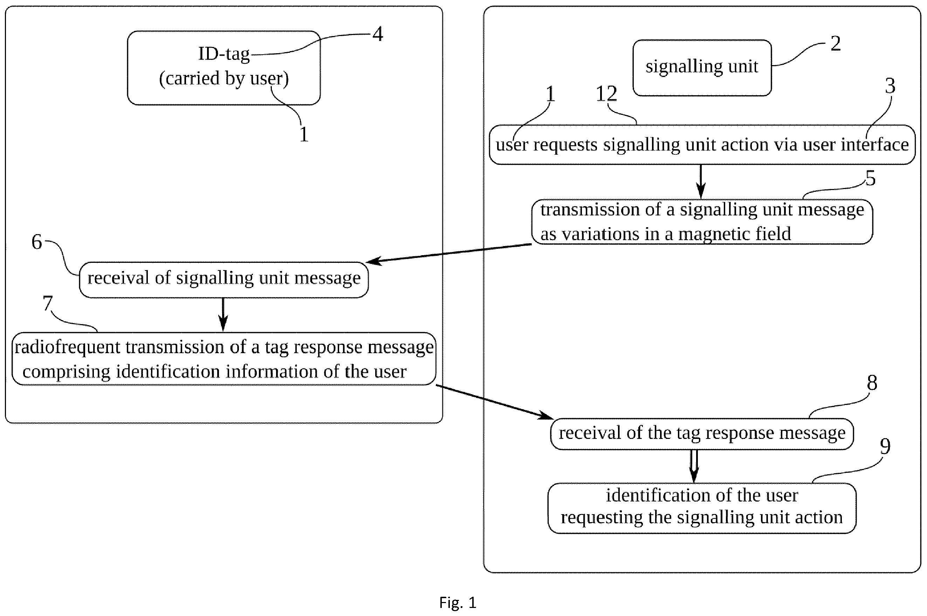

Figure 1 displays a flow diagram of a method according to the present invention.

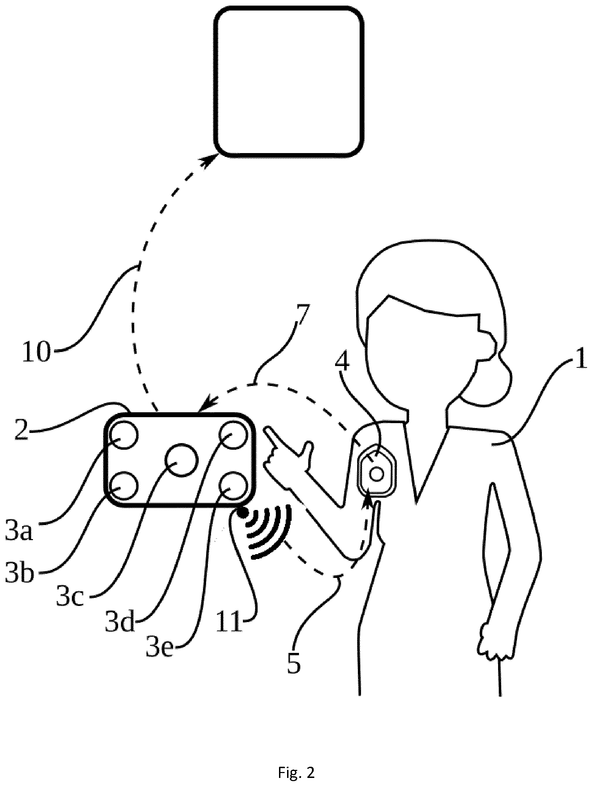

Figure 2 illustrates a system according to the present invention, with an illustration of how the method can be implemented on the system.

### Detailed description of the invention

As indicated above, the signalling unit message is transmitted as variations in a magnetic field (5). The use of variations in a magnetic field to transmit the signalling unit message allows to limit the range of the transmission to anywhere within a few meters from the source of the transmission and thus anywhere within a few meters from the signalling unit. In a preferred embodiment, the range of the transmission is limited to 2m or less, more preferably to 1.5m or less, still more preferably to about 1m.

In an embodiment, the present invention is implemented in combination with a localisation system and/or a localisation method of the prior art, and preferably the localisation method and/or system disclosed in international patent publication no. WO 2015/097315 A1. In this embodiment, the identification tag (4) can be used in a location system for determining a location of the identification tag (4), the identification tag (4) comprising: an ultrasound receiver module configured to convert an ultrasound signal emitted by a first beacon at a first frequency into a first electrical signal; the identification tag (4) comprises a magnetic induction module which is configured to convert a varying magnetic field emitted by a second beacon at a second frequency into a second electrical signal. Preferably the same magnetic induction module is used as for receiving the signalling unit message (6). In this embodiment, the identification tag (4) further comprises a processing module adapted to decode said first electrical signal and said second electrical signal and to extract information therefrom. The identification tag (4) is preferably configured to use said extracted information to produce a location signal. The first frequency is preferably substantially equal to said second frequency. The ultrasound receiver module and the magnetic induction module preferably have identical analogue PHY circuits. In some cases the additional localisation using ultrasound allows to get a better grip on the position of the person carrying the identification tag with respect to the signalling unit. For instance, it could be possible that a person carrying an identification tag is present in the neighbouring room, at the other side of the wall of the signalling unit. If then a user (1) requests an action at that signalling unit (2), the identification tag of the person in the other room may interfere with the intended workflow. If the system and method of the present invention comprise localisation of the identification tag, and preferably room-level localisation, the above described problem can be avoided as the signalling unit (2) can be configured to only take into account response messages of tags located in a pre-defined location.

The present invention allows identification of the user without the need for continuous monitoring, and thus with little to no risk of interfering with medical equipment. Hereby it is important to note that the method involves that the user (1) initiates the transmission of the signalling unit message (5) by performing a physical interaction at the user interface of the signalling unit (12). Furthermore, as the transmission is initiated upon a requested action at the user interface of the signalling unit, one ensures that the user (1), and the identification tag (4) the user (1) is carrying, is nearby the signalling unit (2). The identification occurs automatically once the action at the signalling is requested, hence without any additional action required from the user (1).

In addition, the identification information can be sent as additional context with the requested action. For instance, a patient triggering the alarm can be identified with the above described method and the identification information can be transmitted along with the alarm call. The responders, e.g. a nurse or other care staff, knows the type of call, its origin but also who has triggered this call. This will help the responder to assess the situation in a better way.

The combination of the use of variations in a magnetic field to transfer the signalling unit message and the responder initiating the transmission of the signalling unit message allows to limit the transmission in space (near the signalling unit) and in time (only when the user interfaces with the signalling unit, is a signal transmitted). This combination thus allows for correct identification of the user (the person carrying the identification tag in the vicinity of the signalling unit at the time of interfacing with the signalling unit) while at the same time restrict any possible interference with medical equipment to the absolute minimum.

In an embodiment of the invention, the signalling unit message is transmitted within a limited transmission period after initiation. This limited transmission period is preferably at most 3 seconds, more preferably at most 2.5 seconds, still more preferably at most 2 seconds, yet even more preferably at most 1.5 seconds. Also preferably, the transmission period is limited to the moment a first valid identification is received. The limited transmission period restricts further any possible interference with medical equipment, and furthermore ensures proximity of the user. In the case only certain users may interact with the user interface or may request the signalling unit action, the limited transmission period also ensures that only users carrying a tag, or only users with permission may start the signalling unit action. Furthermore, the limited transmission period also saves on battery lifetime in case the signalling unit is battery-powered.

Furthermore, the action required from the user can be kept at an absolute minimum, which saves time and could save human lives in critical situations. The only action required from the user (1) is interfacing with the signalling unit (2), which could merely consist of pushing a button (3a,3b,3c,3d,3e). Detecting the presence and identifying the user occurs automatically by detecting the identification tag the user is carrying. This means that the user does not have to take out the tag or any other type of identification, such as a badge, from his/her pocket.

In a preferred embodiment, the tag response message comprises a permission table related to the user. A permission table hereby indicates which actions, in particular which signalling unit actions, a user may validly request. In this respect the identification tag comprises a non-volatile memory containing said permission table. In an embodiment, the non-volatile memory of the tag is configured to contain the permission table, preferably at the moment the identification tag is coupled to the user carrying it. In practice this can be done when handing out the identification tag to the user. As such, security can still be ensured as only the authority handing out the tags can configure them with the appropriate permission tables. The signalling unit is hereby preferably configured to check the permission table received via the tag response message versus the requested signalling unit action and to execute the requested signalling unit action only in case of a valid permission check. Note that in this embodiment, wherein the identification tag is provided with the permission table, the signalling unit does not need to make a connection to a central control system to obtain such permission table. This is a clear advantage as connection of the signalling unit to the central control system may not always be ensured and the requested signalling unit action may be urgent.

In a preferred embodiment, the identification information of the user carrying the identification tag comprises a unique tag identification (tag-ID). In a further embodiment, the method comprises transmitting to the signalling unit, a set of revoked tag identifications and the method further comprises the step of comparing, by the signalling unit, the unique tag identification with the set of revoked tag identifications. As such the signalling unit can thus further be configured to restrict any further interactions with the user interface. Basically such a scheme increases security in the case of lost or stolen identification tags. Note that the set of revoked tag identifications can be transmitted to the signalling unit wirelessly or via a wired network. In an embodiment, the set of revoked tag identifications is transmitted to the signalling unit from a central control system, preferably on a regular basis, e.g. every hour or every 10 minutes, and/or initiated by a control user, i.e. a user controlling the transmissions to the signalling units, who can thus broadcast the set of revoked tag identifications to the signalling units of the system. Alternatively or additionally, the set of revoked tag identifications can be transmitted when the signalling unit sends a message to the central control system, e.g. a message comprising the requested action by the user. Hereby the message can preferably be a log message and/or a request message for the central control system, e.g. a message comprising a request for specialized assistance. If such message is received by the central control system, this central control system can send a return message, e.g. an acknowledgement message, comprising the set of revoked tag identifications.

Also alternatively or additionally, the signalling unit may be configured to not allow requested actions to be performed on the basis of information comprised in the tag response message, such as facility system information or tag identification information./ Examples of such configurations may comprise:
- checking if facility system information is outdated, e.g. by looking at version information,
- incorporating timestamping information in the tag response message, allowing the signalling unit to determine when the identification tag, preferably with the permission table, was configured and/or handed over to the user, whereby the signalling unit may be configured to block the requested action if the received timestamp is too old.

Note that the present method and system can be implemented in many different facilities. Hence, incorporation of facility system information in the tag response message allows the signalling unit to check if the identification tag is part of the system used in the facility of the signalling unit. For instance, an identification tag of the hospital should not be allowed to work with the system of the nearby nursing home, and vice versa.

In an embodiment, the signalling unit is configured to allow requested actions to be performed conditionally, taking into account previous requested actions. These previous requested actions may be received at the signalling unit or, the signalling unit may be in communication with additional signalling units which have communicated said previous requested actions. As such, the signalling button may be configured to guide a workflow. We refer to example 7 for further illustration.

### Examples

The invention will now be illustrated in a number of examples.

### Example 1: patient or visitor pushes an alarm button

In hospital rooms or rooms in other types of personal care facilities, a number of signalling units having an alarm button (3c), are typically installed on strategic locations such as:
- near the bed,
- overhanging the bed,
- near the toilet,
- in the shower,
- around the neck of the patient,
- etc.

When pressed, the alarm button (3c) typically raises an alarm, either locally (e.g. an alarm light outside of the room is lit), or by sending a signal to a central control system, which then e.g. notifies an appropriate responder.

However, in some cases, it is important that only patients can ring the alarm, or that only registered visitors and patients can ring the alarm. In these cases, the present invention allows that only the patients and/or visitors which carry an identification tag, and are thus identifiable users, can validly request raising an alarm by pressing the alarm button. The identification tag within the present example thus serves to allow the signalling unit to log the identification information of the person pressing the alarm button.

In addition, the identification information can be sent as additional context with the alarm call such that the nurse or other care staff knows the type of call, its origin but also who has triggered this call. This will help the responder to assess the situation in a better way.

Note that in many cases, an alarm button could typically raise an alarm, even if the user does not carry an identification tag. However, even in such cases, the present invention is useful as the signalling unit may be configured to send the information of the absence of an identification tag along or to raise a different type of alarm in the case of absence of an identification tag. Furthermore, logging of the request by a user without identification tag could help in determining problems, such as discover faulty identification tags.

### Example 2: patient or visitor pushes a "crash cart" button

Signalling units in caring facilities which have to deal with life-threatening emergencies, typically have a "crash cart" button to call for an emergency response team. It is crucial that this button is not accidentally pushed, and that it is pushed only by a user capable of making the decision to call for the emergency response team. In a hospital for instance, only medial personnel (nurses, doctors) may press the crash cart button when they have assessed the situation (possibly after having been called into the room by an alarm signal coming from a signalling unit according to the present invention) and have deemed it necessary to call for the emergency response team. In embodiments of the present invention, the signalling unit can be configured to block the request for calling the emergency response team in the following cases:
- the patient, having an identification tag, has accidentally pushed the crash cart button: the signalling unit has obtained the tag response message which in this example comprises the permission table related to the patient, and has been configured to check the permission table and not to allow this request for patients;
- a prankster visitor, not having an identification tag, or patient without a tag has pushed the crash cart button: the signalling unit receives the request, but has not received identification information, let alone a permission table, and is configured to not allow the request;

### Example 3: visitor pushes an "attended" button

Another situation which is best avoided, is one wherein a call for an alarm is accidentally turned off by e.g. a visitor. Once an alarm call is made by a patient, it may be required that a nurse or any other medical personnel performs a check on the patient. Hence, the present system may be configured to allow only medical personnel to validly request turning off the alarm at a signalling unit. This can be achieved by the present invention by configuring the identification tags of medical personnel to comprise a permission table indicating permission for to turn off alarms at signalling units, whereas identification tags of patients, visitors, non-medical staff, etc. comprise a permission table which indicates non-permission for this action. As such, a visitor cannot switch of the alarm by pressing an "attended" button at the signalling unit.

A nurse, on the other hand, is allowed turning off the alarm by pressing an "attended" button at the signalling unit. This can be done in response to an alarm call, or the nurse may press the "attended" button as an indication, and optionally logging, of having performed a check-up on the patient. In this case the method and system may be used to check if patient rounding is performed adequately.

### Example 4: nurse pushes a "request for assistance" button

One important aspect of signalling units and signalling buttons, is that responders can request additional help or specialist assistance. Typically, it is the first medical responder on the scene which may decide upon request additional assistance. This is preferably done by using the same signalling unit (2) in the room of the patient which could have been used to call the first responder initially.

The medical responder (1) pressing the "requesting for assistance" button (3e) then initiates a method according to the present invention:
- the signalling unit (2) sends out a signalling unit message as variations in a magnetic field (5);
- the identification tag (4) of the responder pressing the button (1) receives the message(6), and subsequently radiofrequently transmits a tag response message (7) comprising identification information of the responder carrying said identification tag,
- the signalling unit (2) then receives said tag response message (8), thereby identifying the responder requesting the signalling unit action (9), which in this case is calling assistance,
- the tag response message hereby comprises a permission table related to the responder (1), and the signalling unit (2) is configured to extract the information from this permission table that the responder indeed has permission to request assistance,
- the signalling unit then sends out the message (10) to e.g. a central control system, that assistance is required, typically this message also containing information regarding the identity of the signalling unit or the location thereof.

The same method can be used for other types of requested actions (10) by the nurse, such as:
- send an alarm call, e.g by pushing an alarm call button (3c),
- indicate and/or log presence in the room, e.g. by pushing button (3a),
- indicate and/or log that the nurse has been here during rounding, e.g. by pushing button (3a),
- transportation of patient, e.g. by pushing button (3b),
- cleaning of the room, e.g. by pushing button (3e),
- call a reanimation team, e.g. by pushing button (3d).

### Example 5: other types of user interfaces

In the previous examples, "buttons" are used at the signalling unit's user interface. However, it should be clear that other types of easy user interfaces are also possible, such as a touch screen, one or more switches, and also voice-activated user interfaces. The present invention has the advantage that it can work with basically any type of user interface since the identification is performed wirelessly without imposing conditions on the type of user interface. In fact, the user interface only needs to be used to allow a user to start a request, upon which the identification is initiated.

### Example 6: loss or theft of identification tag

One important embodiment to the invention involves sending to the signalling unit a list of revoked tag identifications (tag-IDs) , preferably on a regular basis and/or upon request of a control user. This list can be stored locally in the signalling unit, e.g. in non-volatile memory of the signalling unit, and can be accessed when a user requests a signalling unit action at the user interface. This is possible if the tag response message comprises a tag-ID which can then be compared with the list of revoked tag-IDs. If the received tag-ID is not on the list, the signalling unit performs its regular method. If, however, the received tag-ID is contained in the list of revoked tag-IDs, the signalling unit may be configured to block the request for the signalling unit action and/or to notify the central control system that a revoked identification tag has just been used at said signalling unit.

This setup allows to limit the consequences of a lost or stolen identification tag: as soon as such tag has been reported as lost/stolen, its tag-ID can be put on the list of revoked tag-IDs and said list can be communicated to the signalling units.

### Example 7: starting workflow

A signalling unit comprising a number of buttons could be located in a room. A patient could have called for assistance via an alarm button, whereby identification was performed in accordance with the present invention. Hereby the patient was carrying a patient identification tag.

The push on the alarm button could have started a complete workflow. Hereby the signalling unit or other signalling units in the room could be made aware that an alarm button was pushed and that help is required.

A first nurse could come into the room, hereby pushing an attendance button to indicate that the patient is being helped. By pushing the attendance button, the first nurse requests that the alarm is turned off. The first nurse is hereby carrying a first nurse identification tag comprising a permission table indicating that the nurse has the permission to turn off the alarm by pressing the attendance button. Turning off the alarm may comprise sending a message to a central control system and/or other actions such as turning off a corridor lamp which is turned on by pushing the alarm button.

The nurse may then find, during helping of the patient, that a doctor's assistance is required and pushes an assistance button. The signalling unit hereby again checks the identity of the first nurse identification tag, and receives the permission table of the first nurse identification tag. The signalling button allows the request for assistance to be sent when it has checked the permission table and has found a valid permission.

A second nurse, carrying a second nurse tag, may arrive in the room and push an attendance button. The signalling unit checks the identity of the second nurse via the tag response message of the second nurse identification tag, and logs the request. However, the signalling unit is configured to check permission for the requested action on the basis of previous requested actions and can check that there is an outstanding request for doctor's assistance. In this case, the signalling unit can thus be configured not to turn off the request for doctor's assistance, because the attendance button was not pushed by a doctor.

The requested doctor may then arrive in the room carrying a doctor identification tag, and may push the attendance button. The signalling unit may then, upon checking the identity and permission table of the doctor identification tag, turn off the request for doctor's assistance.

The doctor may find that transportation, e.g. to an operating room, is required and may push a transportation button on the signalling unit. The signalling unit checks identity and permission of the tag response message from the doctor identification tag and may allow the request for transportation to be send.

The request for transportation may also trigger a message to a cleaning crew via a central control system. The cleaning crew may arrive in the room, carrying a cleaner's identification tag and push the attendance button of the signalling unit. The signalling unit, having first checked identity and permission table of the cleaner's identification tag, allows the request, which in this case involves a request to update the room's status in the central control system as being cleaned. A second push on the attendance button by someone wearing a cleaner's identification tag (either the same cleaning staff member or another one) is then interpreted by the signalling unit (which is configured to take into account previous requested actions) as a request for updating the room's status as 'clean' in the central control system.

## Claims

1. Method for identifying a user (1) of a signalling unit (2) when said user (1) performs a physical interaction with a user interface (3) of the signalling unit (2), thereby requesting a signalling unit action (12), wherein said user (1) carries an identification tag (4), the method comprising the steps of:
a. transmitting, by the signalling unit, a signalling unit message;
b. receiving said signalling unit message by the identification tag (6), and subsequently transmitting a tag response message by the identification tag (7), said tag response message comprising identification information of the user carrying said identification tag,
c. receiving, by the signalling unit, said tag response message (8), thereby identifying the user requesting the signalling unit action (9)
whereby said transmission is initiated upon said physical interaction of the user (1) at the user interface (3) of the signalling unit (2),
**characterized in that** the signalling unit message is transmitted as variations in a magnetic field (5), and the tag response message is transmitted as a radiofrequency signal.

2. Method according to claim 1, wherein said signalling unit is configured to execute the requested signalling unit action (10) conditionally upon identification of the user in step c.

3. Method according to any of claims 1 or 2, wherein said signalling unit message comprises signalling unit identification information, and/or whereby the method is performed at a facility, and wherein said tag response message comprises facility identification information.

4. Method according to any of claims 1 to 3, wherein said tag response message comprises a permission table related to the user.

5. Method according to claim 4, wherein the signalling unit receives said tag response message comprising the permission table, and wherein the signalling unit performs a check of the received permission table with respect to the requested signalling unit action.

6. Method according to any of claims 1 to 5, further comprising the step of:
d. logging identification information and requested signalling unit action information.

7. Method according to any of claims 1 to 6, wherein the identification information of the user carrying the identification tag comprises a unique tag identification and wherein the method comprises the steps of:
e. transmitting to the signalling unit, a set of revoked tag identifications, and
f. comparing, by the signalling unit, the unique tag identification with the set of revoked tag identifications.

8. Method according to any of claims 1 to 7, wherein the requested signalling unit action comprises any or any combination of the following actions:
- raise an alarm;
- turn off an alarm;
- call assistance;
- send a message to a central control system of the facility;
- log presence of the user.

9. A system for identifying a user (1) of a signalling unit (2), comprising the signalling unit (2) and an identification tag (4),
said signalling unit (2) comprising:
- a physical user interface (3, 3a, 3b, 3c, 3d, 3e),
- a magnetic induction transmission module (11) for transmitting a signalling unit message as variations in a magnetic field (5),
- a radiofrequent transceiving module,
and said identification tag (4) comprising:
- a magnetic induction receiving module for receiving the signalling unit message (6);
- a radiofrequent transceiving module for transmitting a tag response message (7),
whereby said signalling unit (2) is configured, upon a user (1) requesting (12) a signalling unit action at said physical user interface (3) of the signalling unit, to transmit a signalling unit message, and
whereby said identification tag (4) is configured to receive (6) said signalling unit message, and subsequently to transmit (7) a tag response message comprising identification information of the user (1) carrying said identification tag (4),
and whereby the radiofrequent receiving module of the signalling unit (2) is configured to receive (8) said tag response message for identifying (9) the user requesting the signalling unit action,
**characterized in that** the signalling unit message is transmitted as variations in a magnetic field (5), and the tag response message is transmitted as a radiofrequency signal.

10. A system according to claim 9, whereby the user interface (3) comprises one or more buttons (3a, 3b, 3c, 3d, 3e).

11. A system according to claim 9 or 10, wherein said signalling unit is configured to execute the requested signalling unit action (10) conditionally upon identification of the user.

12. A system according to any of claims 9 to 11, whereby said signalling unit message comprises signalling unit identification information and/or wherein said identification tag is configured to embed facility identification information in the tag response message for restricting use of the system within said facility.

13. A system according to any of claims 9 to 12, whereby the identification tag (4) comprises non-volatile memory containing a permission table related to the user, and whereby said tag response message comprises said permission table.

14. A system according to claim 13, wherein the signalling unit (2) is configured to perform a check of the received permission table with respect to the requested signalling unit action.

15. A system according to any of claims 9 to 14, whereby the signalling unit is configured to log the identification information and requested signalling unit action information.

## Patentansprüche

1. Verfahren zum Identifizieren eines Benutzers (1) einer Signalisierungseinheit (2), wenn der Benutzer (1) eine physische Interaktion mit einer Bedienoberfläche (3) der Signalisierungseinheit (2) durchführt und dadurch eine Signalisierungseinheits-Handlung anfordert (12), wobei der Benutzer (1) ein Identifikations-Tag (4) trägt, wobei das Verfahren folgende Schritte umfasst:
a. Übertragen einer Signalisierungseinheits-Nachricht durch die Signalisierungseinheit;
b. Empfangen (6) der Signalisierungseinheits-Nachricht durch das Identifikations-Tag, und daraufhin Übertragen (7) einer Tag-Antwortnachricht durch das Identifikations-Tag, wobei die Tag-Antwortnachricht Identifikationsinformationen des Benutzers, welcher das Identifikations-Tag trägt, umfasst,
c. Empfangen (8) der Tag-Antwortnachricht durch die Signalisierungseinheit und dadurch Identifizieren (9) des Benutzers, welcher die Signalisierungseinheits-Handlung anfordert,
wobei die Übertragung nach der physischen Interaktion des Benutzers (1) an der Bedienoberfläche (3) der Signalisierungseinheit (2) angestoßen wird,
**dadurch gekennzeichnet, dass** die Signalisierungseinheits-Nachricht als Variationen in einem Magnetfeld übertragen wird (5) und die Tag-Antwortnachricht als Hochfrequenzsignal übertragen wird.

2. Verfahren nach Anspruch 1, wobei die Signalisierungseinheit dazu konfiguriert ist, die angeforderte Signalisierungseinheits-Handlung (10) in Abhängigkeit von der Identifizierung des Benutzers in Schritt c. auszuführen.

3. Verfahren nach einem beliebigen der Ansprüche 1 oder 2, wobei die Signalisierungseinheits-Nachricht Signalisierungseinheits-Identifikationsinformationen umfasst und/oder wobei das Verfahren an einer Einrichtung durchgeführt wird, und wobei die Tag-Antwortnachricht Einrichtungs-Identifikationsinformationen umfasst.

4. Verfahren nach einem beliebigen der Ansprüche 1 bis 3, wobei die Tag-Antwortnachricht eine sich auf den Benutzer beziehende Berechtigungstabelle umfasst.

5. Verfahren nach Anspruch 4, wobei die Signalisierungseinheit die Tag-Antwortnachricht, welche die Berechtigungstabelle enthält, empfängt, und wobei die Signalisierungseinheit eine Überprüfung der empfangenen Berechtigungstabelle mit Hinblick auf die angeforderte Signalisierungseinheits-Handlung durchführt.

6. Verfahren nach einem beliebigen der Ansprüche 1 bis 5, ferner umfassend den Schritt des:
d. Protokollierens von Identifikationsinformationen und Informationen über die angeforderte Signalisierungseinheits-Handlung.

7. Verfahren nach einem beliebigen der Ansprüche 1 bis 6, wobei die Identifikationsinformationen des Benutzers, der das Identifikations-Tag trägt, eine eindeutige Tag-Identifikation umfassen, und wobei das Verfahren folgende Schritte umfasst:
e. Übertragen eines Satzes von aufgehobenen Tag-Identifikationen zu der Signalisierungseinheit, und
f. Vergleichen der eindeutigen Tag-Identifikation mit dem Satz von aufgehobenen Tag-Identifikationen durch die Signalisierungseinheit.

8. Verfahren nach einem beliebigen der Ansprüche 1 bis 7, wobei die angeforderte Signalisierungseinheits-Handlung jedwede der folgenden Handlungen oder jedwede Kombination aus diesen umfasst:
- einen Alarm auslösen;
- einen Alarm abschalten;
- Unterstützung herbeirufen;
- eine Nachricht an ein zentrales Steuerungssystem der Einrichtung senden;
- die Anwesenheit des Benutzers protokollieren.

9. System zum Identifizieren eines Benutzers (1) einer Signalisierungseinheit (2), aufweisend die Signalisierungseinheit (2) und ein Identifikations-Tag (4),
wobei die Signalisierungseinheit (2) aufweist:
- eine physische Bedienoberfläche (3, 3a, 3b, 3c, 3d, 3e),
- ein Magnetinduktions-Sendemodul (11) zum Übertragen einer Signalisierungseinheits-Nachricht als Variationen in einem Magnetfeld (5),
- ein Hochfrequenz-Sende/Empfangs-Modul,
und wobei das Identifikations-Tag (4) aufweist:
- ein Magnetinduktions-Empfangsmodul zum Empfangen der Signalisierungseinheits-Nachricht (6);
- ein Hochfrequenz-Sende/Empfangs-Modul zum Übertragen einer Tag-Antwortnachricht (7),
wobei die Signalisierungseinheit (2) dazu konfiguriert ist, nachdem ein Benutzer (1) eine Signalisierungseinheits-Handlung an der physischen Bedienoberfläche (3) der Signalisierungseinheit angefordert hat (12), eine Signalisierungseinheits-Nachricht zu übertragen, und
wobei das Identifikations-Tag (4) dazu konfiguriert ist, die Signalisierungseinheits-Nachricht zu empfangen (6) und daraufhin eine Tag-Antwortnachricht zu übertragen (7), die Identifikationsinformationen des Benutzers (1), welcher das Identifikations-Tag (4) trägt, umfasst,
und wobei das Hochfrequenz-Empfangsmodul der Signalisierungseinheit (2) dazu konfiguriert ist, die Tag-Antwortnachricht zum Identifizieren (9) des Benutzers, welcher die Signalisierungseinheits-Handlung anfordert, zu empfangen (8),
**dadurch gekennzeichnet, dass** die Signalisierungseinheits-Nachricht als Variationen in einem Magnetfeld (5) übertragen wird und die Tag-Antwortnachricht als Hochfrequenzsignal übertragen wird.

10. System nach Anspruch 9, wobei die Bedienoberfläche (3) eine oder mehrere Tasten (3a, 3b, 3c, 3d, 3e) aufweist.

11. System nach Anspruch 9 oder 10, wobei die Signalisierungseinheit dazu konfiguriert ist, die angeforderte Signalisierungseinheits-Handlung (10) in Abhängigkeit von der Identifikation des Benutzers auszuführen.

12. System nach einem beliebigen der Ansprüche 9 bis 11, wobei die Signalisierungseinheits-Nachricht Signalisierungseinheits-Identifikationsinformationen umfasst und/oder wobei das Identifikations-Tag dazu konfiguriert ist, Einrichtungs-Identifikationsinformationen zum Einschränken der Verwendung des Systems innerhalb der Einrichtung in die Tag-Antwortnachricht einzubetten.

13. System nach einem beliebigen der Ansprüche 9 bis 12, wobei das Identifikations-Tag (4) nichtflüchtigen Speicher aufweist, der eine sich auf den Benutzer beziehende Berechtigungstabelle enthält, und wobei die Tag-Antwortnachricht die Berechtigungstabelle umfasst.

14. System nach Anspruch 13, wobei die Signalisierungseinheit (2) dazu konfiguriert ist, eine Überprüfung der empfangenen Berechtigungstabelle mit Hinblick auf die angeforderte Signalisierungseinheits-Handlung durchzuführen.

15. System nach einem beliebigen der Ansprüche 9 bis 14, wobei die Signalisierungseinheit dazu konfiguriert ist, die Identifikationsinformationen und Informationen über die angeforderte Signalisierungseinheits-Handlung zu protokollieren.

## Revendications

1. Procédé d'identification d'un utilisateur (1) d'une unité de signalisation (2) lorsque ledit utilisateur (1) effectue une interaction physique avec une interface utilisateur (3) de l'unité de signalisation (2), demandant de ce fait une action d'unité de signalisation (12), dans lequel ledit utilisateur (1) porte une étiquette d'identification (4), le procédé comprenant les étapes suivantes :
a. la transmission, par l'unité de signalisation, d'un message d'unité de signalisation ;
b. la réception dudit message d'unité de signalisation par l'étiquette d'identification (6), et ensuite la transmission d'un message de réponse d'étiquette par l'étiquette d'identification (7), ledit message de réponse d'étiquette comprenant des informations d'identification de l'utilisateur portant ladite étiquette d'identification ;
c. la réception, par l'unité de signalisation, dudit message de réponse d'étiquette (8), identifiant de ce fait l'utilisateur demandant l'action d'unité de signalisation (9),
de sorte que ladite transmission est commencée lors de ladite interaction physique de l'utilisateur (1) au niveau de l'interface utilisateur (3) de l'unité de signalisation (2),
**caractérisé en ce que** le message d'unité de signalisation est transmis sous forme de variations dans un champ magnétique (5), et le message de réponse d'étiquette est transmis sous forme d'un signal radiofréquence.

2. Procédé selon la revendication 1, dans lequel ladite unité de signalisation est configurée pour exécuter l'action d'unité de signalisation demandée (10) de façon conditionnelle lors de l'identification de l'utilisateur à l'étape c.

3. Procédé selon l'une quelconque des revendications 1 ou 2, dans lequel ledit message d'unité de signalisation comprend des informations d'identification d'unité de signalisation, et/ou de sorte que le procédé est effectué au niveau d'une installation, et dans lequel ledit message de réponse d'étiquette comprend des informations d'identification d'installation.

4. Procédé selon l'une quelconque des revendications 1 à 3, dans lequel ledit message de réponse d'étiquette comprend une table d'autorisations liée à l'utilisateur.

5. Procédé selon la revendication 4, dans lequel l'unité de signalisation reçoit ledit message de réponse d'étiquette comprenant la table d'autorisations, et dans lequel l'unité de signalisation effectue une vérification de la table d'autorisations reçue par rapport à l'action d'unité de signalisation demandée.

6. Procédé selon l'une quelconque des revendications 1 à 5, comprenant en outre l'étape suivante :
d. la journalisation des informations d'identification et des informations d'action d'unité de signalisation demandée.

7. Procédé selon l'une quelconque des revendications 1 à 6, dans lequel les informations d'identification de l'utilisateur portant l'étiquette d'identification comprennent une identification d'étiquette unique et dans lequel le procédé comprend les étapes suivantes :
e. la transmission à l'unité de signalisation d'un ensemble d'identifications d'étiquettes révoquées, et
f. la comparaison, par l'unité de signalisation, de l'identification d'étiquette unique avec l'ensemble d'identifications d'étiquettes révoquées.

8. Procédé selon l'une quelconque des revendications 1 à 7, dans lequel l'action d'unité de signalisation demandée comprend une quelconque ou n'importe quelle combinaison des actions suivantes :
- déclencher une alarme ;
- désactiver une alarme ;
- appeler une assistance ;
- envoyer un message à un système central de commande de l'installation ;
- journaliser la présence de l'utilisateur.

9. Système pour identifier un utilisateur (1) d'une unité de signalisation (2), comprenant l'unité de signalisation (2) et une étiquette d'identification (4),
ladite unité de signalisation (2) comprenant :
- une interface utilisateur physique (3, 3a, 3b, 3c, 3d, 3e),
- un module de transmission par induction magnétique (11) pour transmettre un message d'unité de signalisation sous forme de variations dans un champ magnétique (5),
- un module émetteur-récepteur radiofréquence,
et ladite étiquette d'identification (4) comprenant :
- un module de réception par induction magnétique pour recevoir le message d'unité de signalisation (6) ;
- un module émetteur-récepteur radiofréquence pour transmettre un message de réponse d'étiquette (7),
de sorte que ladite unité de signalisation (2) est configurée, lorsqu'un utilisateur (1) demande (12) une action d'unité de signalisation au niveau de ladite interface utilisateur physique (3) de l'unité de signalisation, pour transmettre un message d'unité de signalisation, et
de sorte que ladite étiquette d'identification (4) est configurée pour recevoir (6) ledit message d'unité de signalisation, et ensuite pour transmettre (7) un message de réponse d'étiquette comprenant des informations d'identification de l'utilisateur (1) portant ladite étiquette d'identification (4),
et de sorte que le module de réception radiofréquence de l'unité de signalisation (2) est configuré pour recevoir (8) ledit message de réponse d'étiquette pour identifier (9) l'utilisateur demandant l'action d'unité de signalisation,
**caractérisé en ce que** le message d'unité de signalisation est transmis sous forme de variations dans un champ magnétique (5), et le message de réponse d'étiquette est transmis sous forme d'un signal radiofréquence.

10. Système selon la revendication 9, de sorte que l'interface utilisateur (3) comprend un ou plusieurs boutons (3a, 3b, 3c, 3d, 3e).

11. Système selon la revendication 9 ou 10, dans lequel ladite unité de signalisation est configurée pour exécuter l'action d'unité de signalisation demandée (10) de façon conditionnelle lors de l'identification de l'utilisateur.

12. Système selon l'une quelconque des revendications 9 à 11, de sorte que ledit message d'unité de signalisation comprend des informations d'identification d'unité de signalisation et/ou dans lequel ladite étiquette d'identification est configurée pour intégrer des informations d'identification d'installation dans le message de réponse d'étiquette afin de restreindre l'utilisation du système à l'intérieur de ladite installation.

13. Système selon l'une quelconque des revendications 9 à 12, de sorte que l'étiquette d'identification (4) comprend une mémoire non volatile contenant une table d'autorisations liée à l'utilisateur, et de sorte que ledit message de réponse d'étiquette comprend ladite table d'autorisations.

14. Système selon la revendication 13, dans lequel l'unité de signalisation (2) est configurée pour effectuer une vérification de la table d'autorisations reçue par rapport à l'action d'unité de signalisation demandée.

15. Système selon l'une quelconque des revendications 9 à 14, de sorte que l'unité de signalisation est configurée pour journaliser les informations d'identification et les informations d'action d'unité de signalisation demandée.
